# EUROPEAN PATENT APPLICATION

(11) **EP 4 667 334 A1**
(43) Date of publication of application: **24.12.2025**
(21) Application number: 25180337.5
(22) Date of filing: 03.06.2025
(51) Int. Cl.: B62D 35/00, B62D 37/00

(54) **BODY REAR STRUCTURE**

(30) Priority: 19.06.2024 JP 2024098825
(71) Applicant: MAZDA MOTOR CORPORATION, Hiroshima 730-8670 (JP)
(72) Inventor: Ioka, Tadashi, Aki-gun, Hiroshima, 730-8670 (JP); Nakata, Akihiro, Aki-gun, Hiroshima, 730-8670 (JP); Bessho, Masaaki, Aki-gun, Hiroshima, 730-8670 (JP); Okamoto, Satoshi, Aki-gun, Hiroshima, 730-8670 (JP)
(74) Representative: Lorenz Seidler Gossel Part. mbB

(57) **Abstract**

To reduce a load applied to a wing-like portion by avoiding cantilever from a rear pillar side to the rear while reducing air resistance in a body side surface portion during travel of a vehicle a pillar garnish (65) is proposed that forms a decorative surface of a rear pillar (6) with a front duct (10F) that communicates inside in a front-rear direction, and introduces and discharges travel wind flowing along a body side surface portion (3) in front of the rear pillar (6) to the rear of the rear pillar (6). A side spoiler (45) behind the pillar garnish (65) includes: a base portion (46) on a cabin side fixed to each of left and right edge portions (40) of a lid body (4); and a wing-like portion (47) having an outer surface (47s) that smoothly continues from the pillar garnish (65) via a parting line (80a) on a vehicle outer side of the base portion (46). The side spoiler (45) is provided with a rear duct 10R that communicates between the base portion (46) and the wing-like portion (47) in the front-rear direction, substantially continues from the front duct (10F), and discharges flowing wind of the front duct (10F) to the rear of a body.

## Description

The present invention relates to a body rear structure including: a lid body that openably/closably covers a body rear surface opening; and a rear pillar that constitutes a part of a side surface portion of a body rear portion along left and right edge portions of the lid body.

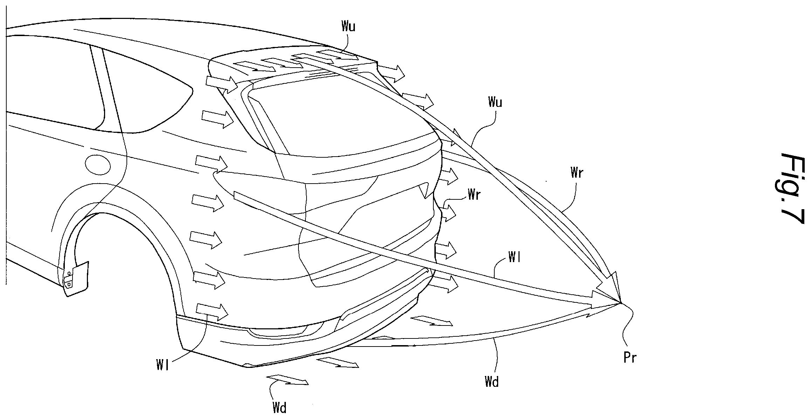

In general, as illustrated in FIG. 7, during travel of a vehicle, convergence of travel winds Wu, Wd, Wl, Wr that respectively flow rearward along surfaces of a body roof, a portion under left and right body floors, and left and right body side surface portions and flow away from body rear end portions thereof to a single point Pr in a manner to define a rear end of a spindle shape at a position behind a body with a predetermined distance therefrom is effective from a perspective of reducing air resistance during the travel of the vehicle.

For example, in order to significantly deflect the travel winds Wl, Wr inward in a vehicle width direction in the left and right body side surface portions, as illustrated in FIG. 7, it is important to deflect the travel winds Wl, Wr, which have been separated from rear end portions of the body side surface portions, inward in the vehicle width direction. In order to realize this, the document as exemplified in Patent Literature 1 has been proposed.

In a rear pillar provided to the side surface portion of the body rear portion in JP2012-126326A, a pillar duct is formed as an air blowing path, through which a part of a body side surface flow taken in from a front side of the rear pillar is discharged to a rear side of the rear pillar, at a height position equal to or higher than a belt line of the body, and a discharge flow from the pillar duct is used as an air curtain. In this way, the body side surface portion flow that has flowed to the rear end portion of the body side surface portion along it is suppressed from being caught in a body rear surface (generating turbulence) when being separated from the rear end portion of the body side surface portion, and consequently is deflected inward in the vehicle width direction.

In order to do so, as proposed in the patent application (Japanese Patent Application No. 2024-070525) as the prior application, the present applicant has found to extend the pillar duct disclosed in Patent Literature 1 described above to a position behind the rear pillar until reaching an outer side in the vehicle width direction of the edge portion of the lid body, to provide a wing-like portion having an outer surface that continues rearward from an outer surface of the rear pillar, and to thereby be able to significantly deflect the body side surface flow inward in the vehicle width direction.

However, upon provision of the wing-like portion described above, when it is configured to protrude rearward in a cantilevered manner from the outer side in the vehicle width direction of the rear pillar, an excessive load is possibly applied to the wing-like portion.
Thus, there is room for improvement.

An object of the invention is to provide a body rear structure that reduces a load applied to a wing-like portion by avoiding cantilever of the wing-like portion from a rear pillar side to the rear while reducing air resistance by significantly deflecting a post-side surface flow, which has been separated from a rear end portion of a body side surface portion during travel of a vehicle, inward in a vehicle width direction.

The invention is characterized by including: a lid body that openably/closably covers a body rear surface opening; a rear pillar that forms each of left and right side portions of the body rear surface opening and extends in a hollow shape in an up-down direction along respective one of left and right edge portions of the lid body; and a side spoiler provided to protrude rearward from each of the left and right edge portions of the lid body. The rear pillar includes: an inner panel; an outer panel that is joined to the inner panel from an outer side in a vehicle width direction and forms a hollow portion extending in the up-down direction with the inner panel; and a pillar garnish that is fixed to an outer surface of the outer panel, covers a part or whole of the outer surface, and serves as a decorative surface of the rear pillar. The pillar garnish is provided with a front duct that communicates inside of the pillar garnish in a front-rear direction, and introduces and discharges travel wind that flows along a quarter window provided in a body side surface portion in front of the rear pillar to the rear of the rear pillar. The side spoiler includes: a base portion on a cabin side that is fixed to an outer surface of respective one of the left and right edge portions of the lid body; and a wing-like portion having an outer surface that smoothly continues from an outer surface of the pillar garnish via a parting line on a vehicle outer side of the base portion. The side spoiler is provided with a rear duct that communicates between the base portion and the wing-like portion in the front-rear direction, substantially continues from the front duct, and discharges the travel wind that has flowed through the front duct to rear of a body.

According to the configuration, in cooperation of the front duct of the pillar garnish and the rear duct of the side spoiler, the travel wind (flowing wind) that flows along the body side surface portion in front of the rear pillar can be guided discharged to the rear of the body side surface portion in the body rear portion. Just as described, by using the travel wind discharged from the duct (the front duct and the rear duct), a post-side surface flow, which has been separated from a rear end portion of the body side surface portion during travel of the vehicle, is significantly deflected inward in the vehicle width direction, and air resistance can thereby be reduced.

In addition, since the pillar garnish provided with the front duct is fixed to the outer panel of the rear pillar, and the side spoiler provided with the rear duct is fixed to the lid body side, it is possible to increase support rigidity of the wing-like portion of the side spoiler that protrudes rearward from the pillar garnish.

Therefore, it is possible to reduce a load applied to the wing-like portion by avoiding cantilever of the wing-like portion from the rear pillar side to the rear while reducing the air resistance by significantly deflecting the post-side surface flow, which has been separated from the rear end portion of the body side surface portion during the travel of the vehicle, inward in the vehicle width direction.

As an aspect of the invention, an outer surface of the wing-like portion may be provided to smoothly continue rearward from a rear end portion of the outer surface of the pillar garnish that forms a part of the body side surface portion, and may be formed to have a larger rear throttle angle than a rear throttle angle of the outer surface of the pillar garnish in a horizontal cross section.

According to the configuration, the post-side surface flow, which has been separated from the rear end portion of the outer surface of the wing-like portion, is made to flow toward a post-duct flow, which is discharged rearward from the rear duct, (to the vehicle width inner side). In this way, in cooperation with the post-duct flow that exerts an ejector effect, the post-side surface flow can further be deflected inward. Therefore, it is possible to reduce the air resistance during the travel of the vehicle.

As an aspect of the invention, the rear throttle angle of the wing-like portion may be set within a range of 25 degrees or greater and 29 degrees or less.

As described above, when the rear throttle angle of the outer surface of the wing-like portion is set to 25 degrees or greater, the post-side surface flow can reliably flow toward the post-duct flow, which is discharged rearward from the rear duct, (to the vehicle width inner side). Thus, in cooperation with the post-duct flow that exerts the ejector effect, the post-side surface flow can significantly be deflected inward in the vehicle width direction. In addition, as described above, since the rear throttle angle of the outer surface of the wing-like portion is set to 29 degrees or less, it is possible to suppress the wing-like portion, which is provided independently of the pillar garnish, from having a cantilever shape that protrudes rearward and to the vehicle width inner side. Thus, it is possible to reduce the load applied to the wing-like portion and to secure external design of the body rear portion.

The invention can provide the body rear structure that reduces the load applied to the wing-like portion by avoiding cantilever of the wing-like portion from the rear pillar side to the rear while reducing the air resistance by significantly deflecting the post-side surface flow, which has been separated from the rear end portion of the body side surface portion during the travel of the vehicle, inward in the vehicle width direction.

### Brief Description of Drawings

FIG. 1 is an external view in which a body rear portion of a vehicle including a body rear structure in the present embodiment is seen obliquely from behind and left.
FIG. 2 is a left view of the body rear portion of the vehicle illustrated in FIG. 1.
FIG. 3 is a cross-sectional view illustrating a main section along a line A-A in FIG. 2.
FIG. 4 is an enlarged cross-sectional view illustrating the main section in FIG. 3.
FIG. 5(a) is a left view illustrating a main section of a body rear structure in a modified example in an enlarged manner, and (b) is a cross-sectional view illustrating the main section along a line B-B.
FIG. 6 is a graph illustrating a simulation result after effectiveness of the body rear structure in the present embodiment and an embodiment associated therewith is verified.
FIG. 7 is an external view of an ideal situation in which travel winds away from rear end portions of a roof, a portion under a body floor, and left and right body side surface portions gather at a predetermined point away from a body to the rear, and in which the body rear portion of the vehicle is obliquely seen from behind and the left.

Hereinafter, a description will be made on an embodiment of the invention with reference to the drawings.

In the drawings, an arrow F indicates a body front direction, an arrow U indicates a body up direction, an arrow OUT indicates an outer side in a vehicle width direction (also referred to as a "vehicle width outer side"), and an arrow IN indicates an inner side in the vehicle width direction (also referred to as a "vehicle width inner side"). In addition, a left-right direction of a body is set on the basis of an occupant who is seated on a driver's seat. Furthermore, left and right side surface portions 3 in a body rear portion of a vehicle V in the present embodiment have substantially bilaterally symmetrical shapes. Thus, hereinafter, a description will mainly be made on the basis of the side surface portion 3 on a body left side.

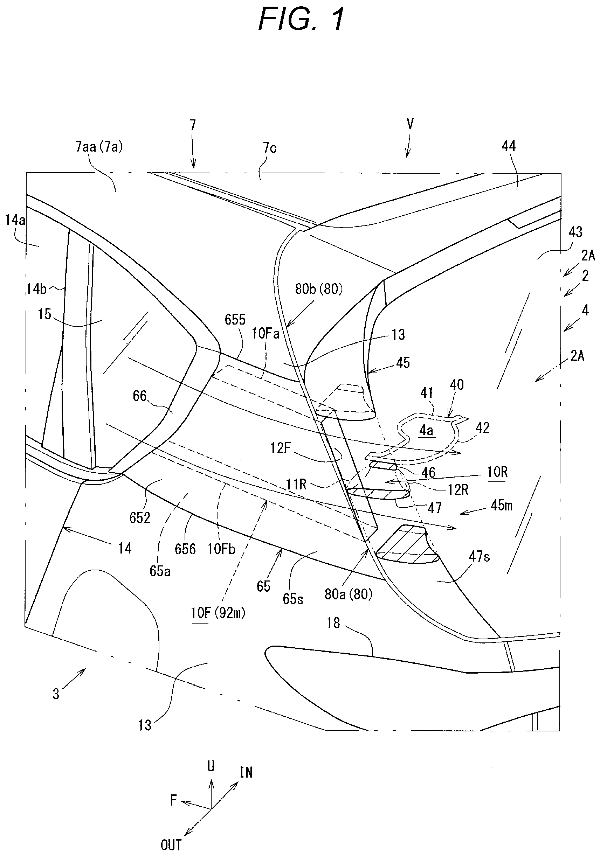

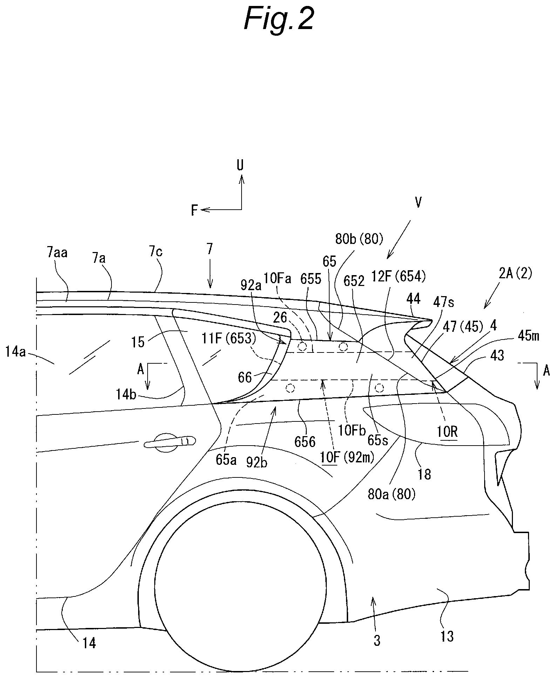

As illustrated in FIGs. 1 and 2, the vehicle V that has a body rear structure in the present embodiment is a hatchback-type passenger vehicle that has a lift gate 4 of a flip-up type in a body rear surface portion 2.

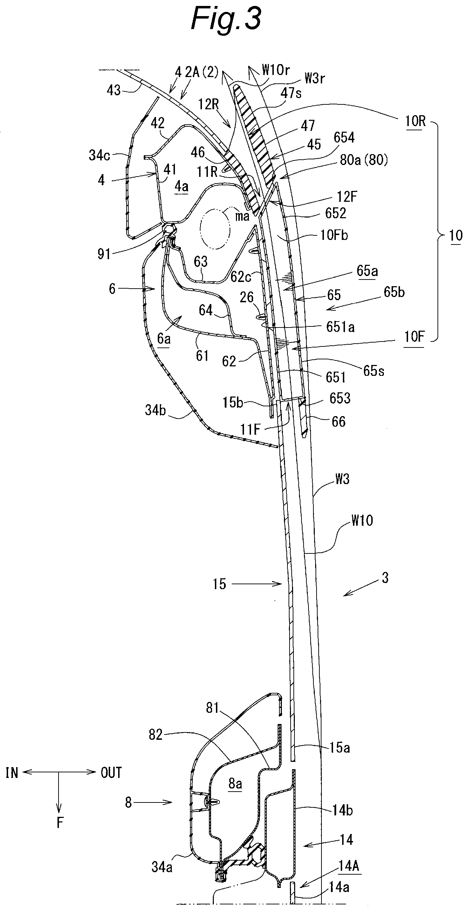

As illustrated in FIG. 3, an intermediate pillar 8 and a rear pillar 6 are provided on a side of each of the left and right side surface portions 3 in the body rear portion of the vehicle V in the present embodiment. These pillars 8, 6 each extend in an up-down direction in a manner to constitute a part of the body side surface portion 3, are disposed away from each other in a vehicle front-rear direction, and support a rear portion of a roof 7 (see FIGs. 1 and 2) that covers an upper portion of a cabin.

As illustrated in FIGs. 1 and 2, the roof 7 includes: a pair of left and right roof side rails 7a extending in the front-rear direction; a rear header (not illustrated) that couples rear end portions of the pair of roof side rails 7a; a substantially rectangular roof panel 7c that covers an entire area between the pair of roof side rails 7a from above; and the like.

The above-described roof side rail 7a is formed by joining and fixing an outer roof side rail 7aa and an inner roof side rail (not illustrated), and forms a roof side closed cross section (not illustrated), which extends in the vehicle front-rear direction, therebetween.

The above-described rear header (not illustrated) defines an upper end side of a body rear surface opening 2A of the cabin (a baggage compartment) provided in the body rear surface portion 2 and, in cooperation with the above-described roof panel 7c, forms a rear header closed cross sectional portion (not illustrated) that extends in the vehicle width direction.

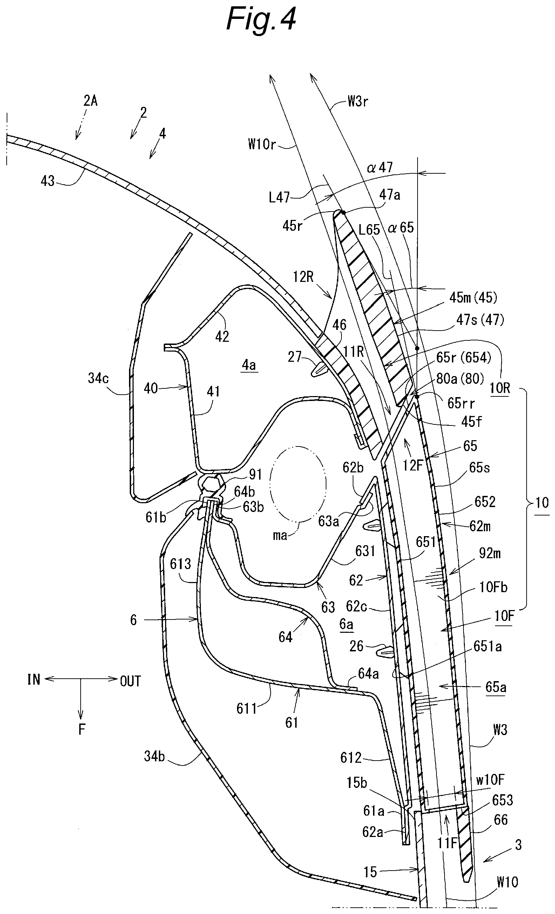

As illustrated in FIG. 4 in particular of FIGs. 3 and 4, the rear pillar 6 forms each of left and right side portions of the body rear surface opening 2A, and includes an inner panel 61, an outer panel 62, a gutter panel 63, a rear pillar reinforcement 64, and a pillar garnish 65.

The inner panel 61 includes: an intermediate portion 611 that extends along the vehicle width direction; a front portion 612 that extends in the front direction from an outer end in the vehicle width direction of the intermediate portion 611; and a rear portion 613 that extends in the rear direction from an inner end in the vehicle width direction of the intermediate portion 611, and extends such that a horizontal cross section forms a crank shape.

The outer panel 62 is located on the outer side in the vehicle width direction of the inner panel 61, but forms a non-decorative surface of the rear pillar 6, and extends along the vehicle front-rear direction. A front end flange portion 62a of the outer panel 62 and a front end flange portion 61a of the inner panel 61 are joined to each other. A rear end flange portion 62b of the outer panel 62 is hemmed (that is, folded back) in a V-shape such that a rear end portion (a rear-side tip portion) thereof protrudes inward in the vehicle width direction to the front.

The gutter panel 63 is substantially formed in a U-shape, a horizontal cross section of which is gradually expanded to the rear, to form a rain gutter (a wet edge) in the side portion of the body rear surface opening 2A.

In detail, the gutter panel 63 includes an outer surface 631 on the outer side in the vehicle width direction. The outer surface 631 of the gutter panel 63 extends while being inclined substantially linearly in the vehicle front-rear direction such that a rear portion thereof including a rear outer end flange portion 63a located in a rear outer end portion is located outward in the vehicle width direction to the rear, and is formed such that an inclination thereof is substantially the same as an inclination of the rear end flange portion 62b of the outer panel 62 in the vehicle front-rear direction.

The rear outer end flange portion 63a on the outer surface 631 of the gutter panel 63 and the rear end flange portion 62b of the outer panel 62 are joined to each other. In this way, the outer surface 631 of the gutter panel 63 and the rear end flange portion 62b of the outer panel 62 extend to continue on the same straight line.

A rear inner end flange portion 63b that protrudes rearward is provided at a rear end on the inner side in the vehicle width direction of the outer surface 631 of the gutter panel 63. The rear inner end flange portion 63b, a rear end flange portion 61b of the inner panel 61 and a rear end flange portion 64b, which will be described below, of the rear pillar reinforcement 64 are joined in a manner to sandwich the flange portion 64b between the flange portions 63b and 61b. Here, a weather strip 91, which is press-fitted to an inner panel 41 on an edge portion 40 at the time when the lift gate 4 is closed, is attached to these three flange portions 61b, 64b, 63b.

In the rear pillar 6, the inner panel 61, the outer panel 62, and the gutter panel 63 described above are joined to form a closed cross-sectional portion 6a as a hollow portion that extends in the up-down direction along the edge portion 40, which will be described below, of the lift gate 4.

The rear pillar reinforcement 64 is located between the inner panel 61 and the outer panel 62 in the vehicle width direction. As described above, the rear end flange portion 64b is joined to the rear end flange portion 61b of the inner panel 61 and the rear inner end flange portion 63b of the gutter panel 63 in the manner to be sandwiched therebetween, and a front end flange portion 64a is joined to the intermediate portion 611 of the inner panel 61. In this way, a closed cross-sectional portion that extends in the up-down direction is also formed between the rear pillar reinforcement 64 and the inner panel 61.

The pillar garnish 65 provided in the rear pillar 6 will be described below.

As illustrated in FIG. 3, the intermediate pillar 8 is formed by fixedly joining an outer intermediate pillar 81 and an inner intermediate pillar 82, and an intermediate pillar closed cross section 8a that extends in the vehicle up-down direction is formed therebetween.

As illustrated in FIGs. 1 and 2, a door opening 14A in which a rear door 14 is disposed is formed between the intermediate pillar 8 (a quarter pillar, a C pillar) and a center pillar (a B pillar) (not illustrated) that is disposed away therefrom to the front. A front end of the rear door 14 is pivotally supported by the center pillar in a manner to be able to open/close the door opening 14A. In an upper portion of the rear door 14, rear door glass 14a is provided, and a door sash 14b is provided at a rear end thereof.

In addition, as illustrated in FIGs. 1 to 3, a quarter window 15 (also referred to as "quarter glass 15") is attached between the intermediate pillar 8 and the rear pillar 6 (a D pillar) described above. The quarter window 15 extends substantially linearly along the front-rear direction, and is provided to the body side surface portion 3 in front of the rear pillar 6, that is, between the rear pillar 6 and the door sash 14b of the rear door 14.

As illustrated in the horizontal cross section in FIG. 3, a front end portion 15a of the quarter window 15 is disposed near the outer side in the vehicle width direction of the outer intermediate pillar 81. Here, as illustrated in FIG. 3, when the rear door 14 is closed, the front end portion 15a of the quarter window 15 is located near and behind the door sash 14b, which is located in a rear end portion of the rear door glass 14a of the rear door 14, and outer surfaces thereof are disposed to smoothly continue in the front-rear direction.

Furthermore, as illustrated in the horizontal cross section in FIG. 4, a rear end portion 15b of the quarter window 15 is disposed near the outer side in the vehicle width direction of the front end flange portion 62a of the outer panel 62 in the rear pillar 6.

Then, the rear end portion 15b of the quarter window 15 is disposed in front of and adjacent to a main surface portion 62c of the outer panel 62 of the above-described rear pillar 6, and outer surfaces thereof are disposed to continue substantially in the front-rear direction.

Furthermore, as illustrated in the horizontal cross section in FIG. 3, an outer surface of the outer panel 62 of the rear pillar 6 is located slightly on the inner side in the vehicle width direction of the outer surface of the door sash 14b when the rear door 14 is closed. Accordingly, in a horizontal cross-sectional view, the quarter window 15 is provided to be gently inclined inward in the vehicle width direction to the rear from the front end portion 15a to the rear end portion 15b.

Next, a description will be made on the pillar garnish 65 provided in the rear pillar 6. As illustrated in FIGs. 1 to 4, the pillar garnish 65 is attached to the outer panel 62 of the rear pillar 6 in the vehicle width direction in a manner to cover an outer surface thereof, that is, the entire outer surface thereof from the outer side surface located on the outer side in the vehicle width direction. The pillar garnish 65 is not limited to the configuration of covering the entire outer surface of the outer panel 62 but may be configured to cover at least a part thereof. An outer surface 65s of the pillar garnish 65 constitutes a decorative surface of the rear pillar 6, that is, a decorative surface of a portion behind the quarter window 15 on the body side surface portion 3.

Here, as illustrated in FIGs. 1 and 2, both the quarter window 15 and the pillar garnish 65 are located above a belt line portion in the body side surface portion 3, and a rear fender panel 13 is provided adjacent to each of upper and lower sides thereof. Together with the upper and lower rear fender panels 13, the pillar garnish 65 forms an outer surface of the side surface portion 3 in the body rear portion along the rear pillar 6.

As illustrated in FIG. 4, the pillar garnish 65 includes a garnish inner wall portion 651 and a garnish outer wall portion 652 located on the outer side in the vehicle width direction of the garnish inner wall portion 651, and each thereof is formed by resin molding. An outer surface of the garnish outer wall portion 652 forms the outer surface 65s of the pillar garnish 65 that forms the decorative surface of the rear pillar 6.

In the pillar garnish 65, the garnish inner wall portion 651 and the garnish outer wall portion 652 are joined to form a monaka shape (crisps with filling),and a flat internal space 65a that extends in the up-down direction and the front-rear direction rather than the vehicle width direction is formed therein.

Here, as long as being formed in a hollow shape that has a front duct 10F, which will be described below, the pillar garnish 65 is not limited to a structure of joining the garnish inner wall portion 651 and the garnish outer wall portion 652 in the monaka shape as described above, but may be formed in a hollow shape by another means such as blow molding, for example.

In the present embodiment, a front end side, a rear end side, an upper end side, and a lower end side of the pillar garnish 65 are respectively provided with a front wall portion 653, a rear wall portion 654, an upper wall portion 655 (see FIGs. 1 and 2), and a lower wall portion 656 (see the drawings), each of which protrudes from at least one of the garnish inner wall portion 651 and the garnish outer wall portion 652 to the other. These front wall portion 653, rear wall portion 654, upper wall portion 655, and lower wall portion 656 are respectively provided to close the internal space 65a of the pillar garnish 65 from the front side, the rear side, the upper side, and the lower side.

In addition, as illustrated in FIGs. 3 and 4, in the pillar garnish 65, the front duct 10F is provided to communicate the inside thereof in the front-rear direction and discharge a travel wind W10, which has been introduced from the front, to the rear of the rear pillar 6. In detail, the travel wind W10 that flows rearward along the quarter window 15, which is provided in front of the rear pillar 6 in the body side surface portion 3, is introduced into the front duct 10F.

As illustrated in FIGs. 1 and 2, the front duct 10F is formed in an intermediate area 92m in the up-down direction of the internal space 65a of the pillar garnish 65.

More specifically, as illustrated in FIGs. 1 and 2, in the internal space 65a (see FIG. 4) of the pillar garnish 65, a duct upper wall portion 10Fa that defines an upper surface of the front duct 10F and a duct lower wall portion 10Fb that defines a lower surface of the front duct 10F is provided. Both the duct upper wall portion 10Fa and the duct lower wall portion 10Fb protrude in a rib shape from at least one of the garnish inner wall portion 651 (see FIG. 4) and the garnish outer wall portion 652 (see FIG. 4) to the other, and are formed to continue along the front-rear direction in upper and lower edge portions of the intermediate area 92m.

As illustrated in FIG. 4, in the intermediate area 92m in the up-down direction of the front wall portion 653 of the pillar garnish 65, a front duct inlet portion 11F is opened to be oriented forward in a manner capable of taking the travel wind W10, which flows rearward along the quarter window 15, into the front duct 10F.

As illustrated in FIG. 4, a width w10F in the horizontal cross section of the front duct 10F, in particular, the width w10F in the front duct inlet portion 11F is set to approximately 34 mm within a range of 6 mm or greater and 40 mm or less.

Here, as described above, in the horizontal cross-sectional view, the quarter window 15 is provided to be gently inclined inward in the vehicle width direction to the rear from the front end portion 15a (see FIG. 3). In this way, as illustrated in FIG. 4, the rear end portion 15b of the quarter window 15 is located near the inner side in the vehicle width direction and the front side of the front duct inlet portion 11F. Thus, as illustrated in FIG. 3, by using a property of travel wind flowing in a manner to be suctioned to the outer surface of the body, the quarter window 15 can actively introduce the travel wind W10, which flows along the outer surface thereof, into the front duct 10F from the front duct inlet portion 11F.

As illustrated in FIG. 4, in the intermediate area 92m in the up-down direction of the rear wall portion 654 of the pillar garnish 65, a front duct outlet portion 12F is opened to be oriented rearward in a manner capable of discharging the travel wind W10, which flows through the rear pillar 6, that is, the front duct 10F, to the rear. As described above, in the front duct 10F, these front duct inlet portion 11F and front duct outlet portion 12F communicate with each other in the vehicle front-rear direction.

As illustrated in FIG. 2, in the present embodiment, in the intermediate area 92m in the up-down direction of the pillar garnish 65, the front duct 10F is entirely formed to have substantially the same vertical width in the front-rear direction. However, it is not limited thereto. The vertical width may be changed in an intermediate portion of a path along the front-rear direction, or a path direction may be changed in the up-down direction.

In addition, as illustrated in FIG. 4, the garnish inner wall portion 651 of the pillar garnish 65 is attached to the outer panel 62 of the metallic rear pillar 6 via a grommet 26 from the outer side in the vehicle width direction.

In detail, in an upper region 92a (see FIG. 2) and a lower region 92b (see FIG. 2) of the garnish inner wall portion 651 with respect to the front duct 10F, a plurality of seat surface portions 651a (see FIG. 4), each of which protrudes inward in the vehicle width direction toward the outer panel 62 of the rear pillar 6, is provided at intervals in the front-rear direction.

Then, as illustrated in FIG. 4, the pillar garnish 65 is attached to the outer panel 62 by fitting the grommet 26, which is attached to the seat surface portion 651a from the inner side in the vehicle width direction, into a through hole (not illustrated) provided in a portion of the outer panel 62 of the rear pillar 6 opposing the seat surface portion 651a.

Further, in the front wall portion 653 that is located on the front end side of the pillar garnish 65, a decorative plate 66 that projects forward from the outer end in the vehicle width direction of the front wall portion 653 is provided in an eave shape.

As illustrated in FIGs. 1 and 2, this decorative plate 66 is formed in a blade shape in a manner to imitate a rear edge frame body along a rear edge portion of outer frames along an upper edge portion and the rear edge portion of the quarter window 15, and is disposed along the rear edge portion of the quarter window 15 in a state where the pillar garnish 65 is attached to the main surface portion 62c of the outer panel 62.

By covering the rear end portion 15b of the quarter window 15 and the front duct inlet portion 11F provided in the front wall portion 653 by this decorative plate 66 from the outer side in the vehicle width direction, favorable appearance of a periphery of the front duct inlet portion 11F is secured.

Next, a description will be made on the lift gate 4.

The lift gate 4 is configured to be able to open/close the body rear surface opening 2A. As illustrated in FIG. 1, this lift gate 4 includes the metallic inner panel 41, a metallic outer panel 42, rear window glass 43, a roof spoiler 44 that is made of a synthetic resin, a side spoiler 45 that is made of the synthetic resin, and the like, and is formed in a substantially curved shape as a whole to be located upward to the front in a vehicle side view (see FIG. 2). The outer panel 42 constitutes an outer surface of a region other than an upper end portion of the lift gate 4. An inner lamp portion of a rear combination lamp 18, a rear wiper mechanism, and the like are attached thereto.

As illustrated in FIGs. 1 and 4, the edge portion 40 on each of the left and right sides of the lift gate 4 is formed by fixedly joining the inner panel 41 and the outer panel 42, and a closed cross section 4a that extends in the vehicle up-down direction is provided between these panels 41, 42.

In the horizontal cross-sectional view, when the lift gate 4 is closed, an outer portion in the vehicle width direction of the inner panel 41 of the lift gate 4 is substantially formed in a U-shape that is gradually expanded to the front in a manner to oppose the gutter panel 63 from the rear side with a movable region ma of a gas spring being interposed therebetween. Here, the gas spring is a spring that uses a reaction force of compressed gas to be able to assist with lifting and lowering of the lift gate 4 when it is opened/closed.

As illustrated in FIG. 3, trims 34a, 34b, 34c as interior members are respectively provided on the cabin inner side of the intermediate pillar 8, the rear pillar 6, and the edge portions 40 of the lift gate 4 described above.

As illustrated in FIG. 1, in cooperation with the outer panel 42, the roof spoiler 44 constitutes a part of an outer surface of the lift gate 4 in a manner to cover the rear window glass 43 and upper end portions of the left and right side spoilers 45. The roof spoiler 44 is formed in a substantially horizontal shape, and bulges rearward from a rear end portion of the roof panel 7c in the vehicle side view.

As illustrated in FIG. 1, in a vehicle back view, each of left and right end portions of the roof spoiler 44 is formed in a shape that is substantially curved downward along an extension line of respective one of left and right end portions of the roof side rail 7a. Then, as illustrated in FIG. 2, in a rear end portion of the roof spoiler 44 that extends in the vehicle width direction, a center portion is disposed at the rearmost position in comparison with the left and right edge portions.

As illustrated in FIGs. 1, 2, and 4, the side spoiler 45 is formed as a unit or integrally by resin molding to have a vertically long shape along the edge portion 40 as a whole, and is provided over a substantially entire length in the up-down direction on both sides of the rear window glass 43.

Here, as illustrated in FIG. 4, the rear pillar 6 coincides with the edge portion 40 and the side spoiler 45 of the lift gate 4 in the vehicle width direction such that a rear end portion 65rr forms a side parting line 80a (a slight clearance) with a wing-like portion 47 of the side spoiler 45 provided on the outer side in the vehicle width direction of the edge portion 40 when the lift gate 4 is closed.

In the present embodiment, as illustrated in FIGs. 1 and 2, the pillar garnish 65 and a duct forming portion 45m, which will be described below, of the side spoiler 45 are provided at the same height as each other, and as illustrated in the horizontal cross section in FIG. 4, a rear surface portion 65r of the rear wall portion 654 of the pillar garnish 65 and a front surface portion 45f of the side spoiler 45 oppose each other via the side parting line 80a.

This side parting line 80a forms a part of a parting line 80 that forms a boundary between the lift gate 4 in a closed state and the body provided with the body rear surface opening 2A, and, as illustrated in FIGs. 1 and 2, extends in the up-down direction in a manner to be visually recognizable in the vehicle side view and located downward to the rear together with both left and right end portions of parting lines 80b extending in the vehicle width direction formed in a boundary portion between the roof 7 and the roof spoiler 44.

In detail, there are cases where the side parting line 80a is visually recognizable in the vehicle side view and where it is visually recognizable in the vehicle back view according to a vehicle type in general. In the vehicle in the present embodiment, a so-called side parting line that is visually recognizable in the vehicle side view is formed. That is, the pillar garnish 65 and the side spoiler 45 are separately provided on the front and rear sides, respectively, with the side parting line 80a being interposed therebetween.

Furthermore, as illustrated in the horizontal cross section in FIG. 4, the rear surface portion 65r of the pillar garnish 65 is formed to be inclined with respect to the front-rear direction in a manner to be located inward in the vehicle width direction to the front on the outer side in the vehicle width direction of the rear end flange portion 62b and thereby extend substantially continuous on the same straight line as the rear end flange portion 62b of the outer panel 62 in the rear pillar 6. Meanwhile, as illustrated in the horizontal cross section in FIG. 4, the front surface portion 45f of the side spoiler 45 that opposes the rear surface portion 65r of the pillar garnish 65 via the side parting line 80a is formed in parallel with the rear surface portion 65r of the pillar garnish 65.

In this way, even when the side parting line 80a that extends in the up-down direction is formed in the boundary portion between the pillar garnish 65 and the side spoiler 45, appearance of the vehicle in the present embodiment in the vehicle side view is improved by suppressing visual recognition of an internal structure in the body rear portion from the body outer side via the side parting line 80a.

As illustrated in FIGs. 1 and 2, the duct forming portion 45m is provided in a region in the up-down direction between the above-described side spoiler 45 in the vertically long shape. As illustrated in FIGs. 1 and 4, the side spoiler 45 includes: a base portion 46 that forms an inner surface in the vehicle width direction over an entire length in the up-down direction including the duct forming portion 45m; and the wing-like portion 47 that is located on the outer side in the vehicle width direction of the base portion 46 and forms an outer surface in the vehicle width direction.

The duct forming portion 45m of the side spoiler 45 is provided with a rear duct 10R that communicates between the base portion 46 and the wing-like portion 47 in the front-rear direction. In detail, the rear duct 10R is formed in a vertically long shape that communicates the side spoiler 45 in the front-rear direction by an outer surface in the vehicle width direction of the base portion 46 and an inner surface in the vehicle width direction of the wing-like portion 47 in the duct forming portion 45m.

As illustrated in FIG. 4, the front surface portion 45f of the side spoiler 45 is provided with a rear duct inlet portion 11R that takes in the travel wind W10 discharged from the front duct outlet portion 12F of the pillar garnish 65. A rear surface portion 45r of the duct forming portion 45m in the side spoiler 45 is provided with a rear duct outlet portion 12R, from which the travel wind W10 flowing through the side spoiler 45 (that is, the rear duct 10R) is discharged. In the rear duct 10R, the rear duct inlet portion 11R and the rear duct outlet portion 12R communicate with each other.

The front duct 10F and the rear duct 10R have substantially the same width (duct width) in the vehicle width direction and the same width in the up-down direction, and the front duct outlet portion 12F and the rear duct inlet portion 11R oppose each other via the side parting line 80a. In this way, the front duct 10F and the rear duct 10R are substantially continuous via the side parting line 80a.

That is, in mutual cooperation of the front duct 10F and the rear duct 10R, the side surface portion 3 of the body rear portion is substantially formed with a single duct 10 that extends substantially continuously over the pillar garnish 65 and the side spoiler 45 and in which the front duct inlet portion 11F and the rear duct outlet portion 12R communicate with each other.

As illustrated in FIG. 4, the base portion 46 of the side spoiler 45 is formed such that the horizontal cross section is curved inward in the vehicle width direction to the rear along an outer surface of the outer panel 42 in each of the left and right edge portions 40 of the lift gate 4, and is fixed to the outer panel 42 via a grommet 26.

The wing-like portion 47 of the side spoiler 45 protrudes rearward from a rear end of the base portion 46. As illustrated in the horizontal cross section in FIG. 4, an outer surface 47s of the wing-like portion 47 that forms an outer surface of the side spoiler 45 smoothly continues rearward from the outer surface 65s of the pillar garnish 65, which forms a part of the outer surface of the side surface portion 3 in the body rear portion via the side parting line 80a.

In the present embodiment, the pillar garnish 65 is smoothly formed such that at least a rear portion of the outer surface 65s is gradually located inward in the vehicle width direction to the rear, and the outer surface 47s of the wing-like portion 47 is smoothly formed over the entire length in the front-rear direction in a manner to be gradually located inward in the vehicle width direction to the rear and thereby smoothly continue from the outer surface 65s of such a pillar garnish 65.

Further, as illustrated in the horizontal cross section in FIG. 4, a rear end portion 47a of the outer surface 47s of the wing-like portion 47 in the side spoiler 45 is formed such that a tangent line L47 is inclined with respect to the front-rear direction, in a manner to be located inward in the vehicle width direction to the rear. An angle of the tangent line L47 of the rear end portion 47a of the outer surface 47s in such a wing-like portion 47 with respect to the front-rear direction is referred to as a rear throttle angle α47 (also referred to as a "rear end angle") in the horizontal cross section of the outer surface of the side spoiler 45.

Similarly, as illustrated in the horizontal cross section in FIG. 4, the rear end portion 65rr of the outer surface 65s of the pillar garnish 65 is also formed such that a tangent line L65 is inclined with respect to the front-rear direction, in a manner to be located inward in the vehicle width direction to the rear in the horizontal cross-sectional view. An angle of the tangent line L65 of the rear end portion 65rr of the outer surface 65s in such a pillar garnish 65 with respect to the front-rear direction is referred to as a rear throttle angle α65 in the horizontal cross section of the outer surface 65s of the pillar garnish 65.

Then, the outer surface 47s of the wing-like portion 47 is formed to have the rear throttle angle α47 that is larger than the rear throttle angle α65 of the outer surface 65s of the pillar garnish 65 in the horizontal cross section.

In the present embodiment, the rear throttle angle α47 of the outer surface 47s of the wing-like portion 47 in the horizontal cross section is set to 25 degrees within a range of 25 degrees or greater and 29 degrees or less, while the rear throttle angle α65 of the outer surface 65s of the pillar garnish 65 in the horizontal cross section is 19 degrees.

As particularly illustrated in FIG. 4 of FIGs. 1 to 4, the body rear structure in the present embodiment described above includes: the lift gate 4 (a lid body) that openably/closably covers the body rear surface opening 2A; the rear pillar 6 that forms each of the left and right side portions of the body rear surface opening 2A and extends in the hollow shape in the up-down direction along respective one of the left and right edge portions 40 of the lift gate 4; and the side spoiler 45 that is provided to protrude rearward from each of the left and right edge portions 40 of the lift gate 4.

Furthermore, the rear pillar 6 includes: the inner panel 61; the outer panel 62 that is joined to the inner panel 61 from the outer side in the vehicle width direction and forms the closed cross-sectional portion 6a (the hollow portion) extending in the up-down direction with the inner panel 61; and the pillar garnish 65 that is fixed to the outer surface of the outer panel 62 and forms the decorative surface of the rear pillar 6 by covering a part of the outer surface.

The pillar garnish 65 is provided with the front duct 10F that communicates the inside of the pillar garnish 65 in the front-rear direction, introduces the travel wind W10 that flows along the quarter window 15 provided in the body side surface portion 3 in front of the rear pillar 6, and discharges it to the rear of the rear pillar 6.

Furthermore, the side spoiler 45 includes: the base portion 46 on the inner side in the vehicle width direction that is fixed to the outer surface of each of the left and right edge portions 40 of the lift gate 4; and the wing-like portion 47 that has the outer surface 47s smoothly continuing with the pillar garnish 65 via the side parting line 80a on an outer surface of the base portion 46.

The side spoiler 45 is provided with the rear duct 10R that communicates between the base portion 46 and the wing-like portion 47 in the front-rear direction, substantially continues the front duct 10F, and discharges the travel wind W10, which flows through the front duct 10F, to the rear of the body.

According to the configuration, when a travel wind (hereinafter, also referred to as a "side surface flow W3") (see FIGs. 3 and 4) that flows along the side surface portion 3 of the body rear portion during the travel of the vehicle is separated from a rear end portion of the body side surface portion 3, it is possible to reduce the load applied to the wing-like portion 47 by avoiding the cantilever of the wing-like portion 47 from the rear pillar 6 side while reducing air resistance by significantly deflecting it inward in the vehicle width direction.

In detail, as illustrated in FIG. 4, the outer surface 65s of the pillar garnish 65 and the outer surface 47s of the wing-like portion 47 of the side spoiler 45 continue in the front-rear direction via the side parting line 80a. Accordingly, during the travel of the vehicle, the side surface flow W3 can be made to flow substantially continuously from a front end of the outer surface 65s of the pillar garnish 65 to the rear end portion 47a of the outer surface 47s of the wing-like portion 47, from which the side surface flow W3 separates.

Meanwhile, the travel wind W10 that is discharged from the rear duct outlet portion 12R (hereinafter, also referred to as a "post-duct flow W10r") (see FIGs. 3 and 4) can exert an ejector effect (a suctioning effect) of drawing a side surface flow W3r (hereinafter, also referred to as a "post-side surface flow W3r") (see FIGs. 3 and 4), a flow velocity of which is higher than the side surface flow W3 and which flows rearward in the vehicle through the rear end portion 47a of the wing-like portion 47 (in other words, while being separated from the rear end portion 47a), inward in a plan view. Such an ejector effect can promote inward deflection of the post-side surface flow W3r in the plan view.

Therefore, when being separated from the rear end of the body side surface portion 3 during the travel of the vehicle, the side surface flow W3 is significantly deflected inward in the vehicle width direction, and the air resistance can thereby be reduced.

According to the configuration, the pillar garnish 65 and the side spoiler 45, which are arranged such that the outer surfaces 65s, 47s thereof continue in the front-rear direction, are formed independently of each other via the side parting line 80a, the pillar garnish 65 is fixedly attached to the outer panel 62 of the rear pillar 6, and the base portion 46 of the side spoiler 45 is fixedly attached to the edge portion 40 of the lift gate 4. Thus, compared to a configuration that the side spoiler 45 can be formed to protrude rearward in a cantilever shape beyond the side parting line 80a from the pillar garnish 65, it can be supported with high rigidity by the edge portion 40.

Therefore, the load applied to the wing-like portion 47 of the side spoiler 45 can be reduced.

In the rear body structure of the present embodiment, in order to obtain the ejector effect by the post-duct flow W10r, the travel wind flowing through the front duct 10F and the rear duct 10R is discharged as the post-duct flow W10r, which is discharged from the rear duct outlet portion 12R, while securing a sufficient flow rate.

In detail, regarding this point, as illustrated in FIG. 3, the quarter window 15 is provided in the body side surface portion 3 in front of the rear pillar 6, and a long air guide section for introducing the travel wind W10 into the front duct 10F can be secured by this quarter window 15. Therefore, as illustrated in FIGs. 3 and 4, the front duct 10F that is provided in the pillar garnish 65 can take in the travel wind W10 along the quarter window 15 while securing the sufficient flow rate.

Furthermore, the front duct 10F and the rear duct 10R are separately provided in the pillar garnish 65 (the body side) and the side spoiler 45 (the lift gate 4 side), respectively, via the side parting line 80a. However, it is configured that the front duct 10F and the rear duct 10R substantially continue in the front-rear direction and that the travel wind W10 introduced into the front duct inlet portion 11F of the front duct 10F is discharged as the post-duct flow W10r rearward in the vehicle from the rear duct outlet portion 12R of the rear duct 10R. In this way, it is possible to discharge the post-duct flow W10r from the rear duct 10R while securing the sufficient flow rate. Therefore, it is possible to reliably obtain the ejector effect by the post-duct flow W10r.

As an aspect of the invention, as illustrated in FIG. 4, the body rear structure in the present embodiment is characterized in that the outer surface 47s of the wing-like portion 47 is provided in the manner to smoothly continue rearward from the rear end portion 65rr of the outer surface 65s of the pillar garnish 65, which forms a part of the body side surface portion 3, and is formed to have the rear throttle angle α47, which is larger than the rear throttle angle α65, in the horizontal cross section of the outer surface 65s of the pillar garnish 65.

According to the configuration, the post-side surface flow W3r, which is separated from the rear end portion 47a of the outer surface 47s of the wing-like portion 47, flows toward the post-duct flow W10r, which is discharged rearward from the rear duct 10R, (to the vehicle width inner side). In this way, in cooperation with the post-duct flow W10r that exerts the ejector effect, the post-side surface flow W3r can further be deflected inward. Therefore, it is possible to reduce the air resistance during the travel of the vehicle.

As an aspect of the invention, as illustrated in FIG. 4, the rear throttle angle α47 of the outer surface 47s of the wing-like portion 47 is set within the range of 25 degrees or greater and 29 degrees or less.

According to the configuration, by setting the rear throttle angle α47 of the outer surface 47s of the wing-like portion 47 to 25 degrees or greater, the post-side surface flow W3r can reliably flow toward the post-duct flow W10r, which is discharged rearward from the rear duct 10R, (toward the vehicle width inner side), and in cooperation with the post-duct flow W10r that exerts the ejector effect, the post-side surface flow W3r can significantly be deflected inward in the vehicle width direction. Meanwhile, by setting the rear throttle angle α47 of the outer surface 47s of the wing-like portion 47 to be equal to or less than 29 degrees, it is possible to suppress the wing-like portion 47 from protruding rearward and to the vehicle width inner side and thus can secure external design of the body rear portion.

As an aspect of the invention, as illustrated in FIG. 4, the width w10F of particularly the front duct inlet portion 11F of the duct 10 (the front duct 10F and the rear duct 10R) in the horizontal cross section is set within the range of 6 mm or greater and 40 mm or less.

According to the configuration, while the rear throttle angle α47 of the wing-like portion 47 is set within the above-described range, the width w10F of the duct 10 in the horizontal cross section is set within the above-described range. In this way, it is possible to suppress enlargement caused by the rearward protrusion of the side spoiler 45, which constitutes the rear duct 10R, while taking the desired flow rate of the travel wind W10 into the duct 10.

In correspondence between the configuration in the invention and the above-described embodiment, the lid body corresponds to the lift gate 4. Similarly, the parting line corresponds to the side parting line 80a, and the hollow portion corresponds to the closed cross-sectional portion 6a. However, the invention is not limited only to the configuration in the above-described embodiment, and many embodiments can be obtained.

For example, the rearward protrusion length of the wing-like portion in the invention and the rear throttle angle of the outer surface of the wing-like portion in the horizontal cross section are not limited to those in the shape of the wing-like portion 47 in the above-described embodiment, and can be changed to those in another mode within the scope included in the technical idea of the invention.

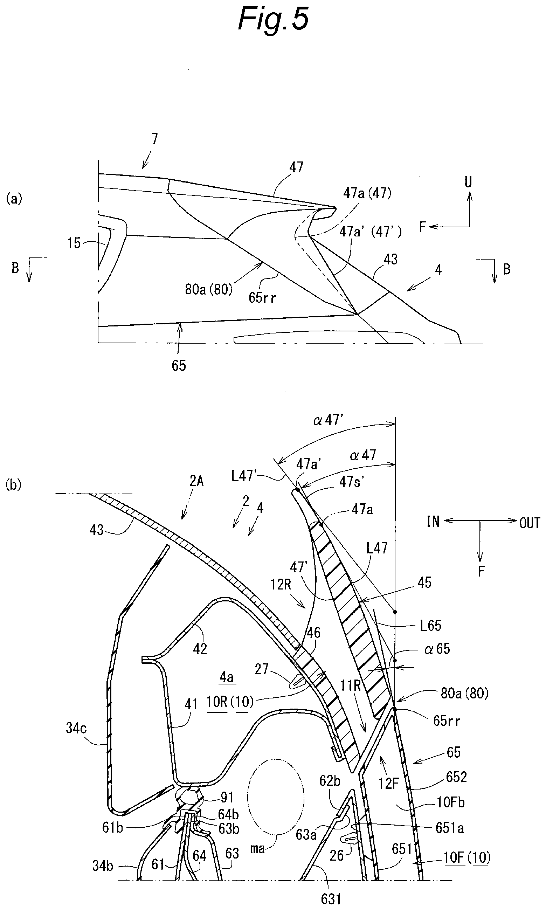

FIG. 5(a) is a side view of a body rear structure according to a modified example that includes a wing-like portion 47' whose rear throttle angle α47' is larger than the rear throttle angle α47 of the wing-like portion 47 in the above-described embodiment, and FIG. 5(b) is a horizontal cross-sectional view of the body rear structure according to the modified example corresponding to the main section in FIG. 4.

As described above, the rear throttle angle α47 of the wing-like portion 47 in the above-described embodiment is set to 25 degrees. Meanwhile, as illustrated in FIGs. 5(a),(b), the rear throttle angle α47' of the wing-like portion 47' in the modified example indicates an angle in the front-rear direction of a tangent line L47' of a rear end portion 47a' of an outer surface 47s' of the wing-like portion 47' and is set to 29 degrees. That is, the wing-like portion 47' in the modified example is formed to protrude farther rearward and inward in the vehicle width direction than the wing-like portion 47 in the above-described embodiment.

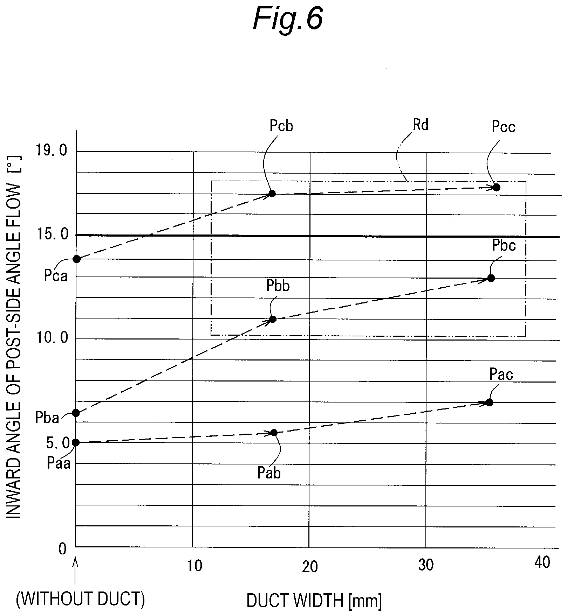

FIG. 6 is a graph illustrating a simulation result of the inward deflection angle of the post-side surface flow W3r, which has flowed through a rear end portion of the side surface portion 3 in the body rear portion, during the travel of the vehicle in the horizontal cross-sectional view is verified for each of rear body structures in inventive examples 1 to 4, which are described below and included in the invention, conventional examples 1 to 4, and a comparative example.

In detail, FIG. 6 is a graph illustrating a relationship between the horizontal width w10F of the duct 10 and the inward angle of the post-side surface flow W3r according to presence or absence of the duct 10 (the front duct 10F and the rear duct 10R) and, when the duct 10 is provided, the two types (25 degrees and 29 degrees) of the rear throttle angle. That is, a horizontal axis in FIG. 6 indicates the horizontal width w10F of the duct 10, and a vertical axis in FIG. 6 indicates the inward angle of the post-side surface flow W3r.

Here, a region Rd that is surrounded by two-dot chain lines in FIG. 6 is a region including the result that is obtained when the simulation is performed with the rear body structure in the invention, that is, a target region. In addition, it is assumed that 15 degrees is an ideal value of the inward deflection angle.

In the conventional example 1 that was set without the duct 10 and the wing-like portion 47, the result indicated by a plot Paa in FIG. 6 was obtained. In the conventional examples 2, 3, in each of which the duct 10 was provided in the conventional example 1, the results indicated by plots Pab, Pac in FIG. 6 were obtained with the horizontal width w10F of the duct 10 being set to 17 mm and 34 mm, respectively. That is, as illustrated in FIG. 6, in each of the conventional examples 2, 3 corresponding to the plots Pab, Pac, respectively, the inward deflection angle of the post-side surface flow W3r was improved from that in the conventional example 1 corresponding to the plot Paa in FIG. 6. However, in all of the conventional examples 1 to 3, it was less than 8 degrees and fell out of a range of the target region Rd.

In the conventional example 4 in which the duct 10 was not provided and the rear throttle angle of the wing-like portion 47 was set to 25 degrees, the result indicated by a plot Pba in FIG. 6 was obtained. That is, as illustrated in FIG. 6, in the conventional example 4 corresponding to the plot Pba, the inward deflection angle of the post-side surface flow W3r was less than 8 degrees and fell out of the range of the region Rd.

The inventive examples 1, 2 are inventive examples, each of which is set to have the duct 10 in the above-described conventional example 4 corresponding to the plot Pba. In detail, the inventive examples 1, 2 are each based on the body rear structure in the above-described embodiment, and the rear throttle angle α47 of the outer surface 47s of the wing-like portion 47 in the horizontal cross section is set to 25 degrees. In these inventive examples 1, 2, the results indicated by plots Pbb, Pbc in FIG. 6 were obtained with the horizontal width w10F of the duct 10 being set to 17 mm and 34 mm, respectively. That is, as illustrated in FIG. 6, in each of the inventive examples 1, 2 corresponding to the plots Pbb, Pbc, respectively, the inward deflection angle of the post-side surface flow W3r was improved from that in the above-described conventional example 4 corresponding to the plot Pba, and exceeded 8 degrees.

In the comparative example in which the duct 10 was not provided and the rear throttle angle of the wing-like portion 47 was set to 29 degrees, the result indicated by a plot Pca in FIG. 6 was obtained. That is, as illustrated in FIG. 6, in the comparative example corresponding to the plot Pca, the inward deflection angle of the post-side surface flow W3r exceeded 8 degrees.

However, it was found that, when the case where the duct 10 was not provided as in the comparative example, in order to obtain the result equivalent to, that is, the inward deflection angle of the post-side surface flow W3r equivalent to the inventive examples 1, 2 in which the rear throttle angle α47 of the wing-like portion 47 was set to 25 degrees, the rear throttle angle of the wing-like portion had to be set to 29 degrees as the larger angle. That is, the wing-like portion as in the comparative example has to protrude longer to the rear and to the inner side in the vehicle width direction.

Furthermore, the inventive examples 3, 4 are inventive examples, each of which is set to have the duct 10 in the above-described comparative example corresponding to the plot Pca. In detail, the inventive examples 3, 4 are each based on the body rear structure in the above-described modified example (see FIGs. 5(a) and (b)), and as illustrated in FIG. 5(b), the rear throttle angle α47' of the outer surface 47s' of the wing-like portion 47' in the horizontal cross section is set to 29 degrees.

In these inventive examples 3, 4, the results indicated by plots Pcb, Pcc in FIG. 6 were obtained with the horizontal width w10F of the duct 10 being set to 17 mm and 34 mm, respectively. That is, as illustrated in FIG. 6, in each of the inventive examples 3, 4 on the plots Pcb, Pcc, the inward deflection angle of the post-side surface flow W3r was improved from that in the comparative example and exceeded 15 degrees as the ideal value.

From the results in FIG. 6 described above, it could be confirmed that the post-side surface flow W3r could be deflected significantly inward in the vehicle width direction while the rearward protrusion lengths of the wing-like portions 47, 47' were suppressed by the cooperation of the wing-like portions 47, 47', the rear throttle angle of each of which was set to be larger than that in the conventional example, and the post-duct flow W10r during the travel of the vehicle. That is, it could be confirmed that the reduction in the air resistance during the travel of the vehicle and the external design of the body rear portion could simultaneously be achieved.

Furthermore, from the results of the plots Pbb, Pbc, Pcb, Pcc in FIG. 6, it could be confirmed that the inward deflection angle of the post-side surface flow W3r was improved when the horizontal width w10F of the duct 10 was 34 mm in comparison with 17 mm.

In this simulation, it is assumed that the vehicle is traveling at a constant vehicle speed of 140 kph. In the case where the horizontal width w10F of the duct 10 was set to 17 mm under this setting, a wind speed at the front duct inlet portion 11F was 40 kph, and a wind speed at the rear duct outlet portion 12R was 55 kph. Meanwhile, when the horizontal width w10F of the duct 10 was 34 mm, the wind speed at each of the front duct inlet portion 11F and the rear duct outlet portion 12R was 76 kph.

From such results, it is considered that the wider horizontal width w10F of the duct 10 increased a volume of the wind that could be taken into the duct 10 from the front duct inlet portion 11F, improved the flow rate of the travel wind through the duct 10, and consequently improved the flow rate of the post-duct flow W10r. That is, the result matched the consideration result that the improvement in the speed of the post-duct flow W10r improved the function (the ejector effect) of pulling the post-side surface flow W3r inward in the vehicle width direction.

### Reference Signs List:

2A body rear surface opening
3 body side surface portion
4 lift gate (lid body)
6 rear pillar
6a closed cross-sectional portion (hollow portion)
10F front duct
10R rear duct
15 quarter window
40 left and right edge portions of lift gate
45 side spoiler
46 base portion
47, 47' wing-like portion
47s, 47s' outer surface of wing-like portion
61 inner panel of rear pillar
62 outer panel of rear pillar
65 pillar garnish
65s outer surface of pillar garnish
65rr rear end portion of outer surface of pillar garnish
80a side parting line (parting line)
α47, α47' rear throttle angle of outer surface of wing-like portion in horizontal cross section
α65 rear throttle angle of outer surface of pillar garnish in horizontal cross section

## Claims

1. A body rear structure comprising:
a lid body (4) that openably/closably covers a body rear surface opening (2A);
a rear pillar (6) that forms each of left and right side portions of the body rear surface opening (2A) and extends in a hollow shape in an up-down direction along respective one of left and right edge portions (40) of the lid body (4); and
a side spoiler (45) provided to protrude rearward from each of the left and right edge portions (40) of the lid body (4), wherein
the rear pillar (6) includes: an inner panel (61); an outer panel (62) that is joined to the inner panel (61) from an outer side in a vehicle width direction and forms a hollow portion (6a) extending in the up-down direction with the inner panel (61); and a pillar garnish (65) that is fixed to an outer surface (47s) of the outer panel (62), covers a part or whole of the outer surface (47s), and serves as a decorative surface of the rear pillar (6),
the pillar garnish (65) is provided with a front duct (10F) that communicates inside of the pillar garnish (65) in a front-rear direction, and introduces and discharges travel wind (W10) that flows along a quarter window (15) provided in a body side surface portion (3) in front of the rear pillar (6) to the rear of the rear pillar (6),
the side spoiler (45) includes: a base portion (46) on a cabin side that is fixed to an outer surface (47s) of respective one of the left and right edge portions (40) of the lid body (4); and a wing-like portion (47) having an outer surface (47s) that smoothly continues from an outer surface (47s) of the pillar garnish (65) via a parting line (80a) on a vehicle outer side of the base portion (46), and
the side spoiler (45) is provided with a rear duct (10R) that communicates between the base portion (46) and the wing-like portion (47) in the front-rear direction, substantially continues from the front duct (10F), and discharges the travel wind (W10) that has flowed through the front duct (10F) to rear of a body.

2. The body rear structure according to claim 1, wherein
the outer surface (47s) of the wing-like portion (47) is provided to smoothly continue rearward from a rear end portion of the outer surface (47s) of the pillar garnish (65) that forms a part of the body side surface portion (3), and is formed to have a larger rear throttle angle (α47) than a rear throttle angle (α47) of the outer surface (47s) of the pillar garnish (65) in a horizontal cross section.

3. The body rear structure according to claim 2, wherein
the rear throttle angle (α47) of the wing-like portion (47) is set within a range of 25 degrees or greater and 29 degrees or less.

4. The body rear structure according to any one of claims 1 to 3, wherein the pillar garnish (65) comprises a monaka structure formed by joining a garnish inner wall portion (651) and a garnish outer wall portion (652), and defines an internal space (65a) that houses the front duct (10F).

5. The body rear structure according to any one of claims 1 to 4, wherein a decorative plate (66) is formed on the front end side of the pillar garnish (65) in a blade-like shape so as to cover a rear end portion (15b) of the quarter window (15) and a front duct inlet (11F) from the vehicle outer side.

6. The body rear structure according to any one of claims 1 to 5, wherein the rear duct (10R) and the front duct (10F) are configured to have substantially the same duct width in vehicle width direction and same height in vertical direction, and are arranged to oppose each other via the parting line (80a) to form a substantially continuous duct path.

7. The body rear structure according to any one of claims 1 to 6, wherein the base portion (46) of the side spoiler (45) is curved inward in a vehicle width direction and is fixed to the outer panel (42) of the lid body (4) via a grommet (26).

8. The body rear structure according to any one of claims 1 to 7, wherein a grommet (26) is used to attach the pillar garnish (65) to the outer panel (62) of the rear pillar (6), with a plurality of seat surface portions (651a) spaced in the front-rear direction for enhanced attachment stability.

9. The body rear structure according to any one of claims 1 to 8, wherein the front duct inlet (11F) has a horizontal cross-sectional width (w10F) in a range of 6 mm to 40 mm.

10. The body rear structure according to any one of claims 1 to 9, wherein the vehicle is configured such that the post-duct flow (W10r) discharged from the rear duct (10R) exerts an ejector effect to draw in the post-side surface flow (W3r) separated from the wing-like portion (47), thereby enhancing inward deflection of the air flow.
